# EUROPEAN PATENT SPECIFICATION

(11) **EP 4 290 011 B1**
(45) Date of publication and mention of the grant of the patent: **02.10.2024**
(21) Application number: 23382100.8
(22) Date of filing: 03.02.2023
(51) Int. Cl.: E01D 19/04

(54) **SLIDING DISCOIDAL ELEMENT FOR A STRUCTURAL SUPPORT ASSEMBLY IN CIVIL ENGINEERING AND STRUCTURAL MECHANISM**
SCHEIBENFÖRMIGES SCHIEBEELEMENT FÜR EINE STRUKTURTRÄGERANORDNUNG IM BAUWESEN UND STRUKTURMECHANISMUS
ÉLÉMENT DISCOIDE COULISSANT POUR UN ENSEMBLE SUPPORT STRUCTUREL DANS LE GÉNIE CIVIL ET MÉCANISME STRUCTUREL

(30) Priority: 03.06.2022 ES 202230936 U
(43) Date of publication of application: 13.12.2023
(73) Proprietor: MK4 World Wide, S.L., 08185 Llica de Vall (Barcelona) (ES)
(72) Inventor: DE LA SOTILLA CLARASO, Rafael, 08185 Llica de Vall (Barcelona) (ES); CORDERO VERGE, Mariela, 08185 Llica de Vall (Barcelona) (ES)
(74) Representative: Isern Patentes y Marcas S.L.

(56) References cited:
- US-A1- 2015 191 881
- US-A1- 2020 123 799
- US-B1- 6 726 994

## Description

### OBJECT OF THE INVENTION

The object of the present invention is to provide a sliding discoidal element obtained from a non-ferrous material obtained by means of an alloy with two resins, incorporating therein a non-ferrous oxide adhesion promoter, and adding an α-olefin copolymer-based additive.

This sliding discoidal element has a low coefficient of friction, and an elastic compressibility obtained through the mechanical qualities of the material and through the geometry of the discoidal element.

### BACKGROUND OF THE INVENTION

Civil structures, such as highway bridges, viaducts for medium and high-speed trains, aqueducts, buildings, and other similar structures, must resist high stresses caused by wind, traffic, thermal changes, earthquakes, and different kinds of impacts; these stresses must be transferred to the ground, in turn ensuring freedom of rotation and movement in accordance with the requirements of structure calculation.

The connection between the upper portion of these structures (board) and the ground is carried out through pillars (columns) and abutments, and these elements in turn connect to the foundation and finally to the ground.

Both parts, Board/Pillars - abutments, have an interface that connects them together by means of said structural bearing that acts as a mechanical hinge, wherein its design and materials are specific to each manufacturer, the sliding material on which the useful life of the bearing depends and which, consequently, will affect the structure being of great importance.

The sliding materials for use in structural bearings used to build bridges, and in general in any type of structure, follow the criteria of European Standard EN 1337/Part 2 "Sliding elements" with regard to their properties and specifications.

The sliding system is made up of a pair of flat, curved or spherical surfaces suitable for sliding and/or rotation, one with respect to the other. To minimise friction between the sliding surfaces, one of the surfaces is made of metal (such as austenitic steel, anodised aluminium alloy, or chrome-plated steel, or other equivalent finishes), and the other surface is a non-ferrous material.

In recent years, mixtures of polymer-type materials such as Polyamides (PA6, PA66) with Polyethylenes (PE, UHMWPE) have been developed, where the obtained product is a product of two materials without chemical bonds between the macromolecules; therefore the properties are not homogeneous or stable, since PA have the characteristic of water absorption and, consequently, these mixtures result in a response from their different mechanical characteristics depending on the level of moisture, i.e., the greater or lesser degree of water saturation of the mixture.

Solutions to this problem have been proposed, such as keeping the polymers saturated with water, something that is viable in a laboratory but cannot be guaranteed in civil works structures located in all sorts of places, under different atmospheric conditions and for periods of several decades.

On the other hand, the geometry of the sliding elements used is made up of a laminar discoidal arrangement where the sliding face usually has dimples, which serve to house some type of grease that provides less friction, while the fixed face is smooth.

Document no. US 2020123799 is known, which discloses a structural bearing provided with a sliding element having a circular perimeter and that can be made of various materials, such as, for example, polyamide, polyphenylene sulphide or UHMWPE (ultra-high molecularweight polyethylene), which common features are part of the preamble of claim 1.

Document no. US 2015191881 is also known, which discloses a structural bearing system for bridges comprising a lower basin, an upper plate, and a sliding spherical cap that has a plurality of dimples over its entire surface which all have the same geometry. Moreover, it is worth mentioning that the dimples present on both faces have the function of lubricating the movable components of the mechanism, using the grease that is confined in said dimples, since they have been pre-filled with grease to facilitate sliding on both faces. Therefore, the elastic compressibility of the cap to improve the deformability thereof to adapt to different situations can be enhanced.

Other discoidal elements of the prior art are described, for example, in documents ES 2775198, CA 3109528, ES 2629520T and ES 2375509T, which are mentioned as a reference since they describe structural bearings provided with a sliding element.

However, none of the documents known in the prior art define a sliding discoidal element that is made from the material defined in the present invention, such that it provides greater mechanical stability when subjected to adverse weather conditions throughout its application, thus extending its useful life.

### DESCRIPTION OF THE INVENTION

An object of the present invention is to therefore provide a sliding discoidal element for a structural bearing assembly in civil engineering as described in claim 1.

By the alloy with two resins, in which the first resin will be called (A) and the second resin will be called (B), and by means of an adhesion promoter and an α-olefin copolymer-based additive, a new material is produced, with very beneficial properties for the most demanding requirements of new civil structures, such as a low coefficient of friction (less than 10%).

The presence of an α-olefin copolymer-based additive provides a greater degree of stability of the mechanical characteristics under different atmospheric situations of temperature, moisture, ageing, etc.

Thus, by means of this new sliding material, it is possible to maintain the mechanical characteristics throughout the useful life of the structure (20 or 40 years or more) while maintaining the stability of its mechanical properties throughout the life of the mechanism, regardless of the different levels of moisture and the atmospheric conditions.

This sliding material provides a great advantage for use as a sliding element for mechanical hinges located in infrastructures, such as bridges or viaducts, since it allows the size of structural bearings to be reduced and to better adapt to civil structures with increasing loads and slimmer formats.

This material not only complies with the suitability tests of the coefficient of friction values established in accordance with standard EN 1337-2:2006, but also with regard to surface pressure, sliding path and/or sliding speed.

Values greater than the normalised value corresponding to the value established and tested in accordance with standard EN 1337-2:2006 are achieved, with regards the surface pressure greater than 60 MPa, the sliding path greater than 10242 m, and the sliding speed greater than 2 mm/s, in which this alloy is used as a sliding material, more particularly those that comply with standard EN 1337-1:2001.

The rest of the dependent claims disclose secondary inventive aspects of the object of the invention.

According to another aspect of the invention, the sliding discoidal element comprises a body made up of two faces opposite each other, one face intended to be removably coupled to a support that forms part of the bearing assembly and one face intended to face a movable portion of an infrastructure, wherein the face facing the movable portion has a first plurality of dimples defined by concavities, while the opposite face also has a second plurality of dimples defined by secondary concavities.

By means of this arrangement of dimples on the non-sliding face, it is possible for the material subjected to loading and unloading cycles (during its useful life) to deform in the direction of the force, behaving as if it were resting on a large number of small springs, increasing elastic compressibility (modulus of elasticity less than 1300 MPa). In other words, an additional elastic behaviour to that of the material itself is facilitated, greatly reducing tangential stresses and thus improving the stability of its properties throughout its life.

The sliding discoidal element is also characterised in that the alloy of the sliding material absorbs a surface pressure greater than the maximum normative value according to EN 1337-2: 2006, even at a temperature above 48°C.

Moreover, the sliding discoidal element is characterised in that the alloy of the sliding material meets the requirements according to EN 1337-2: 2006 at a temperature of -35°C.

Furthermore, the sliding discoidal element of the invention is characterised in that the limit value of the Pressure Speed of the alloy of the sliding material is greater than 30 MPa/m*Minute, V=12 m/min, with a load residence time of 30 min.

On the other hand, this sliding discoidal element (6, 6') is characterised in that at a temperature of 70°C it absorbs a surface pressure of less than 150 MPa.

It is also important to mention that the sliding discoidal element (6, 6') is characterised in that the modulus of elasticity is greater than 1200 MPa and less than 1700 MPa under temperature conditions in a range comprised between 20-80°C.

Furthermore, the sliding discoidal element (6, 6') of the invention is characterised in that it has an elongation limit at room temperature greater than 50% and less than 70%.

### BRIEF DESCRIPTION OF THE DRAWINGS

Figure 1 shows a sectional view corresponding to a POT-type structural mechanism according to the present invention;
Figure 2 shows a sectional view corresponding to a spherical-type structural mechanism according to the present invention;
Figure 3 shows a perspective view of the sliding discoidal element according to the invention;
Figure 4 shows a perspective view of the discoidal element from the side opposite that shown in Figure 3;

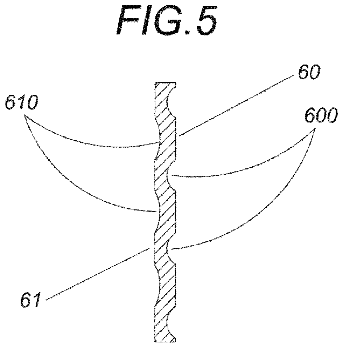

Figure 5 shows a cross-sectional view of the discoidal element according to the invention;

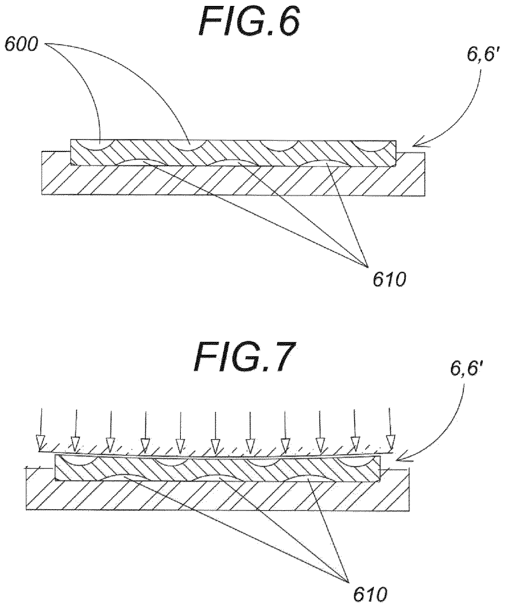

Figure 6 shows a cross-sectional view of the discoidal element mounted on the piston in a condition without load stresses;
Figure 7 shows a cross-sectional view of the discoidal element mounted on the piston in a condition with load stresses;
Figure 8 shows an image taken from a computer-generated finite element simulation between a discoidal element provided with dimples on one of its faces and a discoidal element provided with dimples on both of its faces; and
Figure 9 shows an image taken from a computer-generated finite element simulation between a discoidal element provided with dimples on one of its faces and a discoidal element provided with dimples on both of its faces.

### DESCRIPTION OF A PREFERRED EMBODIMENT

In light of the aforementioned figures, and in accordance with the adopted numbering, one may observe therein a preferred exemplary embodiment of the invention, which comprises the parts and elements indicated and described in detail below.

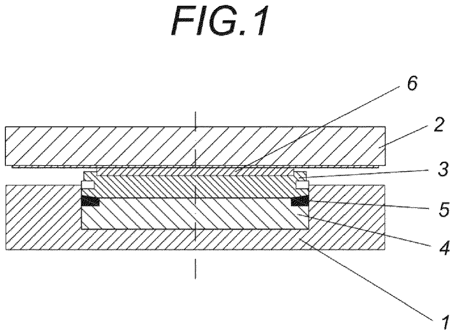

Figure 1 shows a bowl-type structural mechanism (also commonly known as the acronym POT), configured for highway bridges, viaducts for medium and high-speed trains, aqueducts, buildings, and other similar structures, which comprises a lower pot (1) intended to be linked to a pillar or the like, an upper plate intended for a board or beam to be linked, between which a piston (3) or bowl, an elastic pad (4) and a sealing gasket (5) are provided, there being a sliding discoidal element (6) on the piston (3).

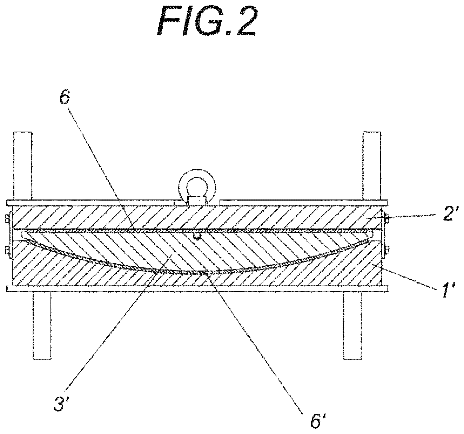

Figure 2 shows a second embodiment of a structural mechanism, of the spherical type, configured for highway bridges, viaducts for medium and high-speed trains, aqueducts, buildings, and other similar structures, which comprises a lower basin (1') intended to be linked to a pillar or the like, an upper plate (2') intended for a board or beam to be linked, between which a spherical cap (3') is provided, characterised in that two discoidal elements (6, 6') are provided, a first discoidal element (6) being in contact with the upper portion of the spherical cap (3') and the upper plate (2'), and a second discoidal element (6') being located below and in contact with the spherical cap (2').

In this way, the first discoidal element (6) has the function of facilitating the sliding of the plate (2'), while the second discoidal element (6') has the function of facilitating the rotation of the cap (3') on the lower basin (1').

Going into greater detail about the manufacture of the sliding discoidal element (6, 6'), it is made of a sliding material from an alloy consisting of a first resin composed of polyamide, polyacetal (POM), polybutylene terephthalate (PBT), polycarbonate (PC) and polyphenylene sulphide (PPS) resins; a second high-molecular-weight polyethylene (UHMWPE) resin; a non-ferrous oxide adhesion promoter and, in particular, Maleic anhydride (C₄H₂O₃), that is intended to establish a chemical bond between the first and second resins; and an α-olefin copolymer-based additive.

It is worth noting that the α-olefin copolymer-based additive is in a proportion of less than 25% by weight.

Table 1 below shows the compression values of the sliding materials of the state of the art and the values with the sliding material object of the present invention, at a temperature of 35°C and 70°C.

The compression values were obtained through tests in accordance with standard EAD 050004; EAD 050009; EAD 050013 for 48 hours at different temperatures and carried out in a materials laboratory:

**table 1**

| **Compressive stress during testing / Test temperature** | **35°C** | **70°C** |
|---|---|---|
| Existing sliding material in the current state of the art | 225 MPa | 80 MPa |
| Sliding material object of the present invention | ≥225 MPa | 150 MPa |

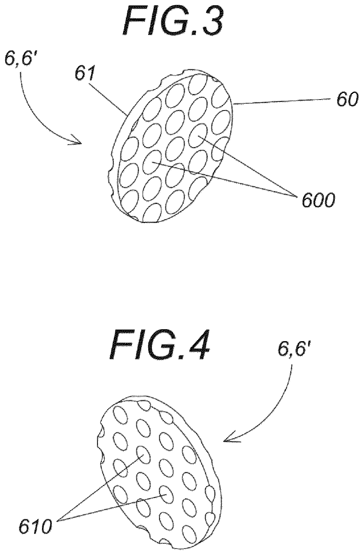

In particular reference to Figures 3 and 4, it can be seen how the aforementioned sliding discoidal element (6) is made up of a body in which it has a face (60) intended to be removably coupled to a support that forms part of the bearing assembly and an opposite face (61) intended to face a movable portion of an infrastructure, in which the opposite face (61) that faces the movable portion has a first plurality of dimples (610) defined by concavities, while the opposite face also has a second plurality of dimples (600) defined by secondary concavities.

It is important to note that the dimples (610) of the first plurality have a greater depth than the dimples (600) formed in the second plurality.

The result of this arrangement is that the elastic deformation of the discoidal element increases, which, when subjected to loading and unloading cycles (during its useful life), deforms in the direction of the force, behaving as if it were resting on a large number of small springs, in other words, an additional elastic behaviour to that of the material itself is provided. Moreover, a more homogeneous distribution of the compressions on the material is obtained, since it has better adaptability, thus improving the stability of its properties throughout its useful life.

Table 2 below shows the results of a series of tests on the modulus of elasticity, elastic limit, percentage elongation, breaking stress and percentage elongation at break, carried out under different environmental conditions, initial state, ageing at 80°C, rest for 11 days after ageing at 80°C:

### Unaged material

| | | |
|---|---|---|
| Modulus of Elasticity | MPa | 1214 |
| Elastic limit | MPa | 31.7 |
| % Elastic deformation | % | 43 |
| Stress at break | MPa | 27.8 |
| % Deformation at break | % | 67 |

### Material aged at 80°C for 48 hours

| | | |
|---|---|---|
| Modulus of Elasticity | MPa | 1203 |
| Elastic limit | MPa | 35.2 |
| % Elastic deformation | % | 41 |
| Stress at break | MPa | 33.4 |
| % Deformation at break | % | 52 |

### Material aged and returned to a temperature of 23±1°C for 11 days

**table 2**

| | | |
|---|---|---|
| Modulus of Elasticity | MPa | 1268 |
| Elastic limit | MPa | 32.7 |
| % Elastic deformation | % | 56 |
| Stress at break | MPa | 31.3 |
| % Deformation at break | % | 67 |

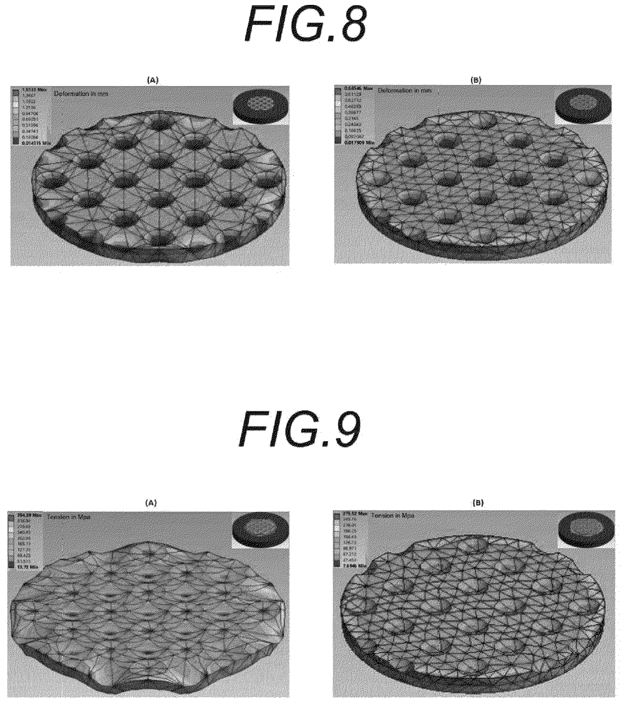

Figure 8 shows the deformations of two discoidal elements in a comparative way, subjected to the same state of loads (225 MPa), the element under the reference (A) being provided with dimples on its two opposite faces and the element under the reference (B) being provided with dimples on one of its faces, so that the disc (A) has a deformation of 1.4101 mm and the disc (B) has a deformation of 0.656 mm.

For this reason, the dimples of the second plurality make it so that the discoidal element (A) offers a more elastic behaviour when subjected to compression, since it behaves as if the disc were resting on a set of small springs, thus obtaining a distribution of more uniform pressures on the discoidal element (A), and a better adaptability to possible deformations of the ferrous material that slides on the discoidal element (A).

Figure 9 shows in a comparative manner the stress state of the discoidal element A, with the first and second plurality of dimples, and of the discoidal element (B), only with the first plurality of dimples on one of its faces. Both discoidal elements (A) and (B) have been subjected to identical bearing load conditions, observing a more uniform stress distribution on the discoidal element (A) than on the discoidal element (B).

### List of reference symbols:

- 1.: lower pot
- 2.: upper plate
- 3.: piston
- 4.: elastic pad
- 5.: sealing gasket
- 6.: discoidal element
- 60.: face
- 61.: opposite face
- 1'.: lower basin
- 2'.: upper plate
- 3'.: spherical cap
- 6'.: second discoidal element

## Claims

1. A sliding discoidal element (6, 6') for a structural bearing assembly in civil engineering, **characterised in that** it is made of a sliding material from an alloy consisting of:
- a first resin composed from polyamide, polyacetal (POM), polybutylene terephthalate (PBT), polycarbonate (PC) and polyphenylene sulphide (PPS) resins;
- a second high-molecular-weight polyethylene (UHMWPE) resin;
- a non-ferrous oxide adhesion promoter that is intended to establish a chemical bond between the first and second resins; and
- an α-olefin copolymer-based additive.

2. The sliding discoidal element (6, 6') according to claim 1, **characterised in that** the adhesion promoter consists of Maleic anhydride (C₄H₂O₃).

3. The sliding discoidal element (6, 6') according to claim 1, **characterised in that** the α-olefin copolymer-based additive is in a proportion of less than 25% by weight.

4. The sliding discoidal element (6, 6') according to claim 1, **characterised in that** it is made up of a body that has a face intended to be removably coupled to a support that forms part of the bearing assembly and a face intended to face a movable portion of an infrastructure, wherein the face facing the movable portion has a first plurality of dimples defined by concavities, while the opposite face also has a second plurality of dimples defined by secondary concavities having a different dimension with respect to the first plurality of dimples.

5. The sliding discoidal element (6, 6') according to claim 4, **characterised in that** the dimples of the first plurality have a greater depth than the dimple formed in the second plurality.

6. The sliding discoidal element (6, 6') according to claim 4, **characterised in that** the dimples of the second plurality have a depth comprised between 0.1 mm and 3.0 mm and a diameter comprised in a range between 0.1 mm and 15.0 mm.

7. The sliding discoidal element (6, 6') according to claim 4, **characterised in that** the dimples of the first plurality are filled with a grease substance.

8. A bowl-type (POT) structural mechanism, configured for highway bridges, viaducts for medium and high-speed trains, aqueducts, buildings, and other similar structures, which comprises a lower pot (1) intended to be linked to a pillar or the like, an upper plate (2) intended for a board or beam to be linked, between which a piston (3), an elastic pad (4) and a sealing gasket (5) are provided, there being a sliding discoidal element (6) on the piston (3), **characterised in that** the sliding discoidal element is according to any of the preceding claims 1 to 7.

9. A structural mechanism, of the spherical type, configured for highway bridges, viaducts for medium and high-speed trains, aqueducts, buildings, and other similar structures, which comprises a lower basin (1') intended to be linked to a pillar or the like, an upper plate (2') intended for a board or beam to be linked, between which a spherical cap (3') is provided, **characterised in that** two discoidal elements (6, 6') are provided, a first discoidal element (6) being in contact with the upper portion of the spherical cap (3') and the upper plate (2'), and a second discoidal element (6') being located below and in contact with the spherical cap (2'), the two discoidal elements (6, 6') being according to any of the preceding claims 1 to 7.

## Patentansprüche

1. Gleitendes scheibenförmiges Element (6, 6') für eine strukturelle Lageranordnung im Bauingenieurwesen, **dadurch gekennzeichnet, dass** es aus einem leitenden Material aus einer Legierung besteht, die Folgendes enthält:
- ein erstes Harz, das aus Polyamid-, Polyacetal(POM)-, Polybutylenterephthalat(PBT)-, Polycarbonat(PC)- und Polyphenylensulfid(PPS)-Harzen zusammengesetzt ist;
- ein zweites Polyethylenharz mit hohem Molekulargewicht (UHMWPE);
- einen Haftungsförderer mit einem Nichteisenoxid, der zwischen dem ersten und dem zweiten Harz eine chemische Bindung herstellen soll; und
- ein α-olefincopolymerbasiertes Additiv.

2. Gleitendes scheibenförmiges Element (6, 6') nach Anspruch 1, **dadurch gekennzeichnet, dass** der Haftungsförderer aus Maleinsäureanhydrid (C₄H₂O₃) besteht.

3. Gleitendes scheibenförmiges Element (6, 6') nach Anspruch 1, **dadurch gekennzeichnet, dass** das α-olefincopolymerbasierte Additiv einen Gewichtsanteil von weniger als 25 % aufweist.

4. Gleitendes scheibenförmiges Element (6, 6') nach Anspruch 1, **dadurch gekennzeichnet, dass** es aus einem Körper besteht, der eine Seite, die entfernbar an eine Stütze gekoppelt sein soll, die einen Teil der Lageranordnung bildet, und eine Seite, die einem bewegbaren Abschnitt einer Infrastruktur zugewandt sein soll, aufweist, wobei die dem bewegbaren Abschnitt zugewandte Seite eine erste Vielzahl von Vertiefungen aufweist, die durch Wölbungen definiert sind, während die gegenüberliegende Seite auch eine zweite Vielzahl von Vertiefungen aufweist, die durch sekundäre Wölbungen definiert sind, die mit Bezug auf die erste Vielzahl von Vertiefungen eine andere Dimension aufweisen.

5. Gleitendes scheibenförmiges Element (6, 6') nach Anspruch 4, **dadurch gekennzeichnet, dass** die Vertiefungen der ersten Vielzahl eine größere Tiefe als die in der zweiten Vielzahl gebildete Vertiefung aufweisen.

6. Gleitendes scheibenförmiges Element (6, 6') nach Anspruch 4, **dadurch gekennzeichnet, dass** die Vertiefungen der zweiten Vielzahl eine Tiefe, die zwischen 0,1 mm und 3,0 mm umfasst ist, und einen Durchmesser, der in einem Bereich zwischen 0,1 mm und 15,0 mm umfasst ist, aufweisen.

7. Gleitendes scheibenförmiges Element (6, 6') nach Anspruch 4, **dadurch gekennzeichnet, dass** die Vertiefungen der ersten Vielzahl mit einer Fettsubstanz gefüllt sind.

8. Schalenartiger (POT) struktureller Mechanismus, der für Autobahnbrücken, Viadukte für Mittel- und Hochgeschwindigkeitszüge, Aquädukte, Gebäude und andere ähnliche Strukturen ausgelegt ist, der einen unteren Topf (1), der mit einer Säule oder Ähnlichem verbunden sein soll, und eine obere Platte (2), die für ein Brett oder einen Träger vorgesehen ist, das bzw. der zu verbinden ist, umfasst, zwischen denen ein Kolben (3), eine elastische Auflage (4) und eine Dichtung (5) bereitgestellt sind, wobei sich auf dem Kolben (3) ein gleitendes scheibenförmiges Element (6) befindet, **dadurch gekennzeichnet, dass** das gleitende scheibenförmige Element einem der vorhergehenden Ansprüche 1 bis 7 entspricht.

9. Struktureller Mechanismus des Kugeltyps, der für Autobahnbrücken, Viadukte für Mittel- und Hochgeschwindigkeitszüge, Aquädukte, Gebäude und andere ähnliche Strukturen ausgelegt ist, der ein unteres Becken (1'), das mit einer Säule oder Ähnlichem verbunden sein soll, eine obere Platte (2'), die für ein Brett oder einen Träger vorgesehen ist, das bzw. der zu verbinden ist, umfasst, zwischen denen eine kugelförmige Kappe (3') bereitgestellt ist, **dadurch gekennzeichnet, dass** zwei scheibenförmige Elemente (6, 6') bereitgestellt sind, ein erstes scheibenförmiges Element (6), das mit dem oberen Abschnitt der kugelförmigen Kappe (3') und der oberen Platte (2') in Kontakt ist, und ein zweites scheibenförmiges Element (6'), das sich unter der kugelförmigen Kappe (2') befindet und mit derselben in Kontakt ist, wobei die zwei scheibenförmigen Elemente (6, 6') einem der vorhergehenden Ansprüche 1 bis 7 entsprechen.

## Revendications

1. Élément discoïdal coulissant (6, 6') pour un ensemble porteur structurel en génie civil, **caractérisé en ce qu'**il est réalisé dans un matériau coulissant à partir d'un alliage constitué de :
- une première résine composée de résines de polyamide, polyacétal (POM), téréphtalate de polybutylène (PBT), polycarbonate (PC) et sulfure de polyphénylène (PPS) ;
- une seconde résine de polyéthylène de haut poids moléculaire (UHMWPE) ;
- un promoteur d'adhésion d'oxyde non ferreux destiné à établir une liaison chimique entre les première et seconde résines ; et
- un additif à base de copolymère d'α-oléfine.

2. Élément discoïdal coulissant (6, 6') selon la revendication 1, **caractérisé en ce que** le promoteur d'adhésion est constitué d'anhydride maléique (C₄H₂O₃).

3. Élément discoïdal coulissant (6, 6') selon la revendication 1, **caractérisé en ce que** l'additif à base de copolymère d'α-oléfine est dans une proportion inférieure à 25 % en poids.

4. Élément discoïdal coulissant (6, 6') selon la revendication 1, **caractérisé en ce qu'**il est constitué d'un corps qui a une face destinée à être accouplée de manière amovible à un support qui fait partie de l'ensemble porteur et une face destinée à faire face à une partie mobile d'une infrastructure, dans lequel la face faisant face à la partie mobile a une première pluralité de creux définis par des concavités, tandis que la face opposée a également une seconde pluralité de creux définis par des concavités secondaires ayant une dimension différente par rapport à la première pluralité de creux.

5. Élément discoïdal coulissant (6, 6') selon la revendication 4, **caractérisé en ce que** les creux de la première pluralité ont une plus grande profondeur que le creux formé dans la seconde pluralité.

6. Élément discoïdal coulissant (6, 6') selon la revendication 4, **caractérisé en ce que** les creux de la seconde pluralité ont une profondeur comprise entre 0,1 mm et 3,0 mm et un diamètre compris dans une plage entre 0,1 mm et 15,0 mm.

7. Élément discoïdal coulissant (6, 6') selon la revendication 4, **caractérisé en ce que** les creux de la première pluralité sont remplis d'une substance grasse.

8. Mécanisme structurel de type cuvette (POT), conçu pour les ponts autoroutiers, les viaducs pour trains à moyenne et grande vitesse, les aqueducs, les bâtiments, et d'autres structures similaires, qui comprend un pot inférieur (1) destiné à être lié à un pilier ou analogue, une plaque supérieure (2) destinée à la liaison d'une planche ou poutre, entre lesquels un piston (3), un tampon élastique (4) et un joint d'étanchéité (5) sont prévus, un élément discoïdal coulissant (6) étant disposé sur le piston (3), **caractérisé en ce que** l'élément discoïdal coulissant est conforme à l'une quelconque des revendications précédentes 1 à 7.

9. Mécanisme structurel, du type sphérique, conçu pour les ponts autoroutiers, les viaducs pour trains à moyenne et grande vitesse, les aqueducs, les bâtiments, et d'autres structures similaires, qui comprend un bassin inférieur (T) destiné à être lié à un pilier ou analogue, une plaque supérieure (2') destinée à la liaison d'une planche ou poutre, entre lesquels est prévue une calotte sphérique (3'), **caractérisé en ce que** deux éléments discoïdaux (6, 6') sont prévus, un premier élément discoïdal (6) étant en contact avec la partie supérieure de la calotte sphérique (3') et la plaque supérieure (2'), et un second élément discoïdal (6') étant situé en dessous et en contact avec la calotte sphérique (2'), les deux éléments discoïdaux (6, 6') étant conformes à l'une quelconque des revendications précédentes 1 à 7.
